# EUROPÄISCHE PATENTANMELDUNG

(11) **EP 2 073 347 A2**
(43) Veröffentlichungstag der Anmeldung: **24.06.2009**
(21) Anmeldenummer: 08022027.0
(22) Anmeldetag: 18.12.2008
(51) Int. Cl.: H02K 1/20, H02K 7/14, A61C 1/06, A61C 17/28

(54) **Elektromotor**

(30) Priorität: 20.12.2007 DE 102007062541
(71) Anmelder: SycoTec GmbH & Co. KG, 88299 Leutkirch im Allgäu (DE)
(72) Erfinder: Bischof, Thomas, 87758 Illerbeuren (DE); Mack, Karl, 88299 Leutkirch (DE); Werner, Dieter, 88299 Leutkirch (DE)
(74) Vertreter: Schulz, Manfred

(57) **Zusammenfassung**

Die Erfindung betrifft einen Elektromotor. Dieser besteht aus einem auf einer Rotorwelle drehbar gelagerten Rotor und einen den Rotor umgebenden Stator. Der Stator besitzt einen Rückschlusskörper und eine mit Strom beaufschlagbare Wicklung. Der Rückschlusskörper nimmt zumindest teilweise die Medienleitung/en auf.

## Beschreibung

Die Erfindung betrifft einen Elektromotor, bestehend aus einem auf einer Rotorwelle drehbar gelagerten Rotor und einen den Rotor umgebenden Stator, wobei der Stator einen Rückschlusskörper und eine mit Strom beaufschlagbare Wicklung aufweist und der Elektromotor mindestens eine Medienleitung besitzt.

Gattungsgemäße Elektromotoren werden zum Beispiel für den Antrieb von rotierenden, dentalen oder medizinischen Instrumenten eingesetzt. Zu diesem Zweck werden die rotierenden Instrumente, zum Beispiel Bohrer oder ähnliches über eine genormte Kupplung auf den Elektromotor aufgesteckt. Das dentale Instrument ist während des Einsatzes mit verschiedenen Versorgungsmedien über eine oder mehrere Medienleitungen zu versorgen. Es wird zum Beispiel im dentalen Anwendungsbereich Sprayluft, Spraywasser, Kühlluft, Strom, Licht und so weiter benötigt, die über den Elektromotor zu den angetriebenen dentalen Instrumenten, in den Werkzeugkopf zugeführt werden muss. Die Medienleitungen haben natürlich einen gewissen Durchmesser und sind im Motorbereich zu integrieren, wobei bekanntermaßen entsprechende Dentalinstrumente als Handgeräte gewisse Außenmaße nicht überschreiten sollten, um die Bedienbarkeit und Handlichkeit nicht zu beeinträchtigen. Gleichzeitig hat der Elektromotor aber ein ausreichendes Drehmoment und Drehzahl zur Verfügung zu stellen.

Im Stand der Technik sind mehrere Lösungen bekannt, die eine Durchführung einer Medienleitung durch den Rückschlußkörper eines Motors zeigen. Allen Lösungen des Standes der Technik, die bekannt geworden sind, umfassen dabei Lösungen, die sich ausschließlich mit der Kühlung des Motors bzw. des Rückschlußkörpers beschäftigen.

Ausgehend von diesem Stand der Technik ist es Aufgabe der vorliegenden Erfindung einen Elektromotor zur Verfügung zu stellen, der eine geschickte Durchführung der Medienleitung/en durch den Elektromotor zu finden, wobei die Eigenschaften des Elektromotors nicht merklich beeinträchtigt sind.

Zur Lösung dieser Aufgabe geht die Erfindung aus von einem Elektromotor wie eingangs beschrieben und schlägt vor, dass der Rückschlusskörper zumindest eine Durchführung für die wenigstens teilweise Bildung oder Aufnahme der Medienleitung beziehungsweise Medienleitungen zur Durchführung eines oder mehrerer Medien aufnimmt. Je nach Anwendungsfall des erfindungsgemäßen Elektromotors ist eine oder aber auch mehrer Medienleitungen durch den Elektromotor zu führen. Der aufgrund der Funktionsweise des Elektromotors sowieso vorhandene Rückschlusskörper wird jetzt zusätzlich dazu verwendet, die Medienleitung/en zur Durchführung der Medien durch den Motor aufzunehmen. Durch diese Integration der Medienleitungen/en in den Rückschlusskörper, wird für die Anordnung der Medienleitung/en kein zusätzliche Bauraum benötigt, die Einflüsse der Medienleitung/en auf die magnetischen Eigenschaften sind bei geschickter Anordnung der Medienleitung/en auch vernachlässigbar, was zu fast unveränderten Kennzahlen des erfindungsgemäßen Elektromotors führt. Umgekehrt bedeutet dies aber auch, dass der durch die Integration der Medienleitung in den Rückschlusskörper gewonnene Bauraum dem Stator beziehungsweise der Wicklung am Stator zugegeben werden kann und so der erfindungsgemäße Elektromotor bei gleichbleibenden Außenabmessungen des erfindungsgemäßen Gegenstandes im Vergleich mit dem Gegenstand nach dem Stand der Technik eine Verbesserung seiner Kenndaten erfährt.

Im Gegensatz zu allen, im Stand der Technik bekannten Lösungen ist es bei der vorliegenden erfindungsgemäßen Lösung nicht vorgesehen, die Medien, die durch den Rückschlußkörper geführt werden, am Motor selbst, beispielsweise zur Kühlung zu verwenden, sondern es handelt sich tatsächlich um eine Lösung, bei der es gelingt, Medienleitungen, die beispielsweise an einem von dem Motor angetriebenen Werkzeug benötigt werden, durch den Motor ohne bzw. mit minimalem Leistungsverlust für den Motor durch diesen hindurch zu führen. Dabei ist es sowohl möglich, die Medienleitung oder die Medienleitungen von der einen Seite an einen Motor anzukoppeln, nämlich an die Durchführung durch den Motor, die Medienleitung selbst wird dann durch den im Motor vorhandenen Kanal beispielsweise gebildet. Auf der anderen Seite kann dann wieder eine Medienleitung angekoppelt bzw. angeschlossen werden.

Geschickterweise geschieht dies so, daß die Durchführung von der dem Antrieb abgewanden Seite bzw. von der dem anzutreibenden Werkzeug bzw. von der angetriebenen Spindel abgewandten Seite auf die dem Werkzeug zugewandte Seite zu führen. Die Medien, egal ob gasförmig oder flüssig oder aber letztlich elektrische Leitungen oder dergleichen, dienen dabei nicht der Verwendung in bzw. an dem Motor selbst, sondern gehen sozusagen an dem Motor vorbei.

Man kann also von räumlich getrennten Einheiten sprechen, die durch die erfindungsgemäße Lösung zur Verfügung gestellt werden.

Die Erfindung umfasst dabei, wie bereits erwähnt, sowohl eine Ausgestaltung, bei der die Durchführung im Rückschlußkörper eine oder mehrere Medienleitungen aufnimmt, genauso wie die Variante, bei der die Durchführung die Medienleitung bildet. Die Durchführung im Rückschlußkörper ist dabei bevorzugt als schlauchartiger Kanal, als Tunnel oder als Bohrung zur Bildung oder Aufnahme der Medienleitung/en vorgesehen.

Des weiteren schlägt die Erfindung vor, daß die Medienleitung/en Unterstützung und/oder zum Betreiben der von dem Elektromotor angetriebenen Elemente, wie z.B. von Werkzeugen oder einer Spindel dient. Dadurch gelingt es jetzt, platzsparend, beispielsweise beim Einsatz als Dentalmotor, die am Werkzeug benötigten Medien, wie Kühlluft, Spülwasser, welches unter hohem Druck steht, zur Verfügung zu stellen und gleichzeitig den Antrieb des Werkzeuges vorzunehmen. Die Ausgestaltung nach der Erfindung bietet daher die Möglichkeit, eine sehr platzsparende Lösung anzubieten, die insbesondere vom Bedienkomfort den im Stand der Technik bekannten Lösungen weit überlegen ist. Die aus dem Stand der Technik bekannten Lösungen, die sich ausschließlich mit der Kühlung des Elektromotors bzw. seines Stators oder Rotors beschäftigen, sind für den Einsatzzweck, wie er zuvor beschrieben wurde, nicht geeignet.

Die Erfindung stellt demgegenüber eine sehr elegante Lösung zur Verfügung, die alle im Stand der Technik bekannten Probleme elegant löst.

Wie bereits erwähnt, zeichnet sich eine Ausgestaltung der Erfindung dadurch aus, daß die Medienleitungen von der der Antriebsseite abgewandten Seite des Elektromotors zu der dem Antrieb zugewandten Seite durch den Elektromotor geführt werden. Selbstverständlich ist es, falls erforderlich, auch möglich, die umgekehrte Richtung zu wählen. Bevorzugt ist allerdings die zuerstbeschriebene Variante.

Die Erfindung zeichnet sich auch dadurch aus, daß die Medienleitungen als vom Motor räumlich getrennte Einheiten vorgesehen sind. Dadurch gelingt es, ein oder mehrere Medien durch den Motor hindurch zuführen, ohne diesen zu belasten bzw. ohne dessen Leistungskraft wesentlich zu verringern. Dies wurde weiter vorne bereits beschrieben.

Durch den erfindungsgemäßen Vorschlag wird die Medienleitung im Elektromotor verhältnismäßig weit außen angeordnet. Dies ist vorteilhaft, da dann auf Abwinkelungen oder Abkröpfungen der Medienleitung/en im weiteren Verlauf verzichtet werden kann, da oftmals angestrebt ist die Medienleitung/en, zum Beispiel Gas, Luft, Wasser und so weiter in einem gewissen Abstand zum Bearbeitungspunkt einzusetzen beziehungsweise zur Verfügung zu stellen. Zum einen wird dadurch die Herstellung des erfindungsgemäßen Elektromotors beziehungsweise des damit angetriebenen Dentalwerkzeuges beziehungsweise Instrumentes erleichtert und zum anderen auch die Strömungseigenschaften verbessert.

Des Weiteren ermöglicht die Medienführung im Stator-Rückschlussblech einen kleinen Luftspalt zwischen Rotor und Stator und somit einen hohen magnetischen Fluss im Magnetkreis.

In einer bevorzugten Variante der Erfindung ist vorgesehen, dass im Rückschlusskörper ein schlauchartiger Kanal, ein Tunnel oder eine Bohrung zur Bildung oder Aufnahme der Medienleitung vorgesehen ist.

Für die Ausgestaltung des Rückschlusskörpers gibt es eine Vielzahl von Realisierungsmöglichkeiten, wie noch weiter später erläutert wird. Grundsätzlich ist es möglich, dass der Rückschlusskörper zum Beispiel hülsenartig aufgebaut ist und eine Bohrung aufweist, welche die Medienleitung bildet. Eine gleiche Art von Medienleitung entsteht aber auch, wenn der Rückschlusskörper aus einer Vielzahl von gleichartig ausgebildeten Rückschlussscheiben gebildet ist, die an vorgegebener Position eine Öffnung oder einen Durchbruch besitzen. Stapelt man nun diese Scheiben übereinander, so kommen die jeweiligen Öffnungen an der gleichen Position zu liegen und bilden auch so einen Kanal, genaugenommen einen schlauchartigen Kanal oder Tunnel, wie bei einer Bohrung. Natürlich ist es auch möglich, an Stelle eines schlauchartigen, allseitig geschlossenen Kanals als Medienleitung auch bewusst im Rückschlusskörper eine Nut oder Kehle als Medienleitung auszubilden. Gegebenenfalls wird dann, je nachdem, wo diese Nut oder Kehle an dem Rückschlusskörper angeordnet ist, eine Außenhülse übergestülpt oder ein Innenrohr eingesteckt, um so eine abgeschlossene Medienleitung zu erhalten. Der Begriff "Medienleitung" ist erfindungsgemäß sehr weit auszulegen. Zunächst ist erfindungsgemäß vorgesehen, dass die in den Rückschlusskörper eingebrachte Bohrung oder der schlauchartige Kanal beziehungsweise Tunnel selber die Medienleitung bildet, also zum Beispiel als Rohr, und somit als Teil des Leitungssystemes für Gase oder Wasser oder andere Flüssigkeiten und so weiter dient. Der schlauchartige Kanal, Tunnel oder die Bohrung kann aber in einer anderen Variante auch der Aufnahme einer anderen Medienleitung, zum Beispiel einem Stromkabel, Datenleitung (zum Beispiel von Sensoren) oder einem Glasfaserkabel, dienen. Die gewählte Formulierung deckt beide Fälle ab.

Es ist klar, dass die erfindungsgemäßen Elektromotoren natürlich auch mit Mischformung der Ausgestaltung der Medienleitung alternativ ausgestattet sind. Dabei umfasst die Erfindung sowohl Elektromotoren, die nur mit einer Medienleitung, wie auch Elektromotoren, die mit mehreren Medienleitungen ausgestattet sind. Auch wenn vorstehend und nachfolgend oftmals nur von einer Medienleitung gesprochen wird, so beziehen sich diese Aussagen natürlich auch in gleicher Weise auch auf die Anordnungen mit mehreren Medienleitungen.

Geschickterweise ist gefunden worden, dass die Medienleitung im Rückschlusskörper, bezogen auf die Rotationsachse der Rotationswelle schräg verlaufend angeordnet ist. Eine solche Orientierung wie auch eine ebenfalls alternativ vorgesehene Anordnung der Medienleitung im Rückschlusskörper auf einer spiralförmigen oder schraubenförmigen Bahn führt dazu, das magnetische Verhalten des Rückschlusskörpers beziehungsweise des gesamten Elektromotores zu verbessern. Natürlich führt die Einarbeitung der Medienleitung als Materialschwächung oder durch Materialentnahme in dem Rückschlusskörper zu einer entsprechenden Beeinträchtigung der magnetischen Eigenschaften. An dem Elektromotor bilden sich Rastmomente aufgrund der unterschiedlichen magnetischen Eigenschaften des Rückschlusskörpers aus. Ist aber nun die Anordnung der die magnetischen Eigenschaften beeinträchtigenden Medienleitung in axialer Richtung verändert, so wird der negative Effekt der Rastmomente gemildert oder tritt nicht mehr in Erscheinung. Hierfür ist es dann günstig, wenn die Medienleitung im Rückschlusskörper entlang einer Richtung verlegt ist, die von der Parallelen zur Rotationsachse der Rotorwelle abweicht. Dies kann einerseits eine hierzu schräg verlaufende Anordnung sein oder andererseits eine spiralförmige oder schraubenförmige Bahn, die dann zum Beispiel den Rückschlusskörper wendelartig durchzieht. Dabei unterscheidet sich eine spiralförmige Bahn von einer schraubenförmigen Bahn durch den sich verändernden Durchmesser der spiralförmigen Bahn gegenüber dem gleichbleibenden Durchmesser der schraubenförmigen Bahn.

Neben diesen, ein Rastmoment gut unterdrückenden Varianten ist aber natürlich auch ein Elektromotor, bei welchen die Medienleitung/en parallel zur Rotationsachse der Rotorwelle angeordnet ist, erfindungsgemäß. Wird zum Beispiel der Elektromotor nur von einer oder wenigen Medienleitung/en durchdrungen, so bilden sich unter Umständen keine störenden Rastmomente im Betrieb aus.

Der Rückschlusskörper besitzt eine gewisse Wandstärke und ist oftmals zylinderartig oder hülsenartig ausgebildet. Bezüglich dieser Wandung ist in einer bevorzugten Variante der Erfindung die Medienleitung mittig angeordnet und allseitig von dem Material des Rückschlusskörpers umgeben.

Alternativ hierzu ist es möglich, dass die Medienleitung im Randbereich des Rückschlusskörpers auf der Innen- oder Außenseite angeordnet ist. Dabei umfasst die Erfindung gleichwohl Lösungen, bei welchen im Randbereich eine Bohrung oder eine schlauchartige Medienleitung vorgesehen ist oder auch eine nut- oder kehlartige Ausgestaltung gewählt ist. Dies hängt von den resultierenden gewünschten magnetischen Eigenschaften einerseits, aber auch von dem Zweck der Medienleitung andererseits ab. So ist zum Beispiel das Einlegen eines Lichtwellenleiters als Beleuchtungsmittel oder das Einlegen eines elektrischen Kabels in eine Nut oder Kehle einfacher, als das Durchführen durch eine mehrere cm lange Bohrung oder Tunnel. Entsprechend wird die Montage erleichtert. Auf der anderen Seite bietet natürlich eine Bohrung oder eine schlauchartige Ausgestaltung der Medienleitung von vorneherein eine dichte Anordnung, die zum Beispiel für das Leiten von Gasen oder Flüssigkeiten gewünscht ist.

Dabei ist es möglich, dass die Medienleitung auf der Innenseite, also der dem Rotor zugewandten Seite, oder der Außenseite angeordnet ist. Natürlich ist die Montage auf der Außenseite, gerade wenn eine nutartige Ausgestaltung der Medienleitung/en gewünscht ist, einfacher. Gleichwohl gehören beide Varianten zur Erfindung.

In einer bevorzugten Variante der Erfindung ist vorgesehen, dass der Rückschlusskörper als Hülse ausgebildet ist. Diese Hülse ist zum Beispiel als Drehteil einstückig gebildet und weist zum Beispiel eine axial verlaufende Bohrung oder, an der Oberfläche (Innen- oder Außenoberfläche) gewendelt oder schräg verlaufend, eine Nut auf.

Neben der einstückigen Ausgestaltung des Rückschlusskörpers als Hülse ist es in einer erfindungsgemäßen Weiterentwicklung auch vorgesehen, das der Rückschlusskörper aus mehreren zusammengefassten Hülsensegmenten besteht. Die Hülsensegmente sind gegebenenfalls untereinander wieder gleichartig oder auch unterschiedlich. Die Hülsensegmente berühren sich an ihren jeweiligen Stirnflächen und sind in geeigneter Weise miteinander verbindbar. Die Anordnung von Hülsensegmenten hat insbesondere auch für die Einarbeitung der Medienleitungen Vorteile, da diese zum Beispiel an den Stirnflächen, zum Beispiel durch das Ausfräsen der Stirnfläche, realisierbar sind.

In einer weiteren erfindungsgemäßen Variante ist vorgesehen, dass der Rückschlusskörper aus einer Vielzahl, in axialer Richtung nebeneinander angeordneter Rückschlussscheiben besteht. Eine Vielzahl von im Wesentlichen identisch ausgeprägten Rückschlussscheiben werden paketartig zusammengestellt und besitzen an ihrer jeweiligen Umfangsposition in vorgegebener Weise entsprechende Ausbrechungen oder Durchbrüche beziehungsweise Öffnungen, um so die Medienleitung/en zu bewirken oder aufzunehmen. Es werden so entsprechende Nuten oder Tunnel über die ganze Länge des Rückschlusskörpers gebildet.

Geschickterweise wird dabei die Rückschlussscheibe als Stanzteil ausgebildet, wodurch zum einen eine kostengünstige Fertigung sichergestellt ist und zum anderen die Standscheiben mit hoher Wiederholbarkeit der einzelnen Scheiben untereinander herstellbar sind.

Der erfindungsgemäße Elektromotor wird bevorzugt als Gleichstrommotor ausgebildet, insbesondere für den Anwendungsfall eines Antriebes für Dentalinstrumente ist der erfindungsgemäßer Elektromotor als kollektorloser Gleichstrommotor ausgebildet.

In einer bevorzugten Ausgestaltung der Erfindung ist vorgesehen, dass die Medienleitung/en für den Transport von Gasen wie Luft, Druckluft, Kühlluft, Reinigungsgasen, Flüssigkeiten, Wasser, Flüssigkeiten-Gasgemische, Spraywasser, Kühlwasser, Strom oder auch Licht dient. Insbesondere die Weiterentwicklung der Lichtwellenleiter erlaubt es, Lichtwellenleiter einzusetzen und so eine hohe Leuchtkraft durch die Lichtwellenleiter bei begrenztem Platzangebot zur Verfügung zu stellen. Dabei nimmt die Medienleitung (Nut, Tunnel und so weiter) diese Lichtwellenleiter auf.

Des Weiteren umfasst die Erfindung nicht nur einen Elektromotor wie eingangs beschrieben, sondern betrifft auch ein medizinisches oder dentales Werkzeug, welches mit einem solchen Elektromotor angetrieben ist. Dabei ist zu beachten, dass dieser Anwendungsfall nur einer von vielen Fällen ist, bei welchen der erfindungsgemäße Elektromotor einsetzbar ist. Insofern ist die Ausgestaltung des Elektromotors an gewisse Größenvorgaben nicht gebunden. Der Elektromotor kann auch in Maschinen Verwendung finden, die deutlich größer sind als ein in der Hand gehaltenes medizinisches oder dentales Werkzeug. Des Weiteren umfasst die Erfindung auch Werkzeugmotorspindeln, bei welchen ein Elektromotor wie beschrieben als Direktantrieb eingesetzt wird und durch welchen z. B. Kühlflüssigkeit zum Bearbeitungswerkzeug geleitet wird.

Medizinische oder dentale Werkzeuge besitzen oftmals eine Kupplung, an welcher verschiedene medizinische oder dentale Instrumente beziehungsweise Geräte ankoppelbar sind. Dadurch wird der Einsatzbereich eines solchen Werkzeuges erheblich vergrößert. Oftmals ist an solchen Werkzeugen der Einsatz von entsprechenden Medien, die über Medienleitungen heranzuführen sind, notwendig.

Die Erfindung ist schematisch in der Zeichnung gezeigt. Es zeigen:
- Fig. 1: in einer Schnittdarstellung in einer dreidimensionalen Ansicht einen erfindungsgemäßen Elektro- motor;
- Fig. 2a, 2b, 2c: jeweils in einer dreidimensionalen Ansicht verschiedene Ausgestaltun- gen des Rückschlusskörpers nach der Erfindung;
- Fig. 3: eine Schnittdarstellung des erfin- dungsgemäßen Elektromotors und
- Fig. 4: eine Draufsicht auf den erfin- dungsgemäßen Elektromotor.

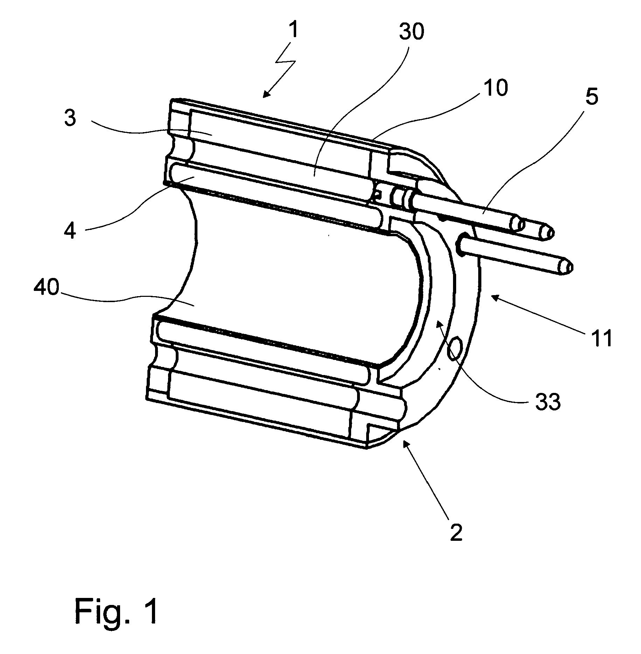

In Fig. 1 ist in einer dreidimensionalen Ansicht ein Teil des erfindungsgemäßen Elektromotors gezeigt. Nicht gezeigt sind die beweglichen, weil rotierenden Teile des Elektromotors.

Allgemein gilt aber, dass die Antriebsteile des Elektromotores in einem Motorgehäuse angeordnet sind, wobei mit dem Gehäuse auch ein Kupplungsstück verbunden ist, auf welches ein durch den Elektromotor anzutreibendes dentales oder medizinisches Instrument oder Gerät gesteckt werden kann. Das Kupplungsstück ist oftmals eine genormte Kupplung, um Austauschbarkeit auch mit anderen Systemen zu erreichen.

Des Weiteren weist der Elektromotor 1 eine in dem Motor beziehungsweise Motorgehäuse gelagerte Rotorwelle auf, hierfür sind entsprechende Motorlager in bekannter Weise vorgesehen. Der (nicht gezeigte) Rotor wird von dem Stator 2 umgeben. Der Stator 2 besteht dabei aus einem Rückschlusskörper 3 und einer mit Strom beaufschlagbaren Wicklung 4. In bekannter Weise besitzt der Rotor einen Permanentmagneten, der sich aufgrund des sich in der Wicklung 4 aufbauenden Magnetfeldes zu drehen beginnt. Dabei ist der Permanentmagnet des Rotors als zweipolig, diametral ausgerichteter Rotormagnet ausgeführt. Der Rückschlusskörper 3, der oftmals aus weichmagnetischen Material besteht, dient einer effektiven Führung des von der mit Strom beaufschlagten Wicklung 4 erzeugten Magnetfeldes.

In dem hier gezeigten Ausführungsbeispiel ist die Wicklung 4 auf der Innenseite 33 des Rückschlusskörpers 3 vorgesehen. Zum Schutze der Wicklung 4 ist eine Schutzschicht oder Schutzhülse 40 vorgesehen, die zwischen Wicklung 4 und dem (nicht gezeigten) Rotor angeordnet ist. Diese z.B. als Schutzummantelung ausgebildete Schutzhülse 40 kann zum Beispiel eine Umspritzung der Wicklung 4 sein. Alternativ ist es natürlich auch möglich, die Wicklung 4 auf der Außenseite des Rückschlusskörpers 3 anzuordnen.

An der Stirnseite 11 des Elektromotors 1 stehen mehrere Medienleitungen 5 parallel zur Längserstreckung des Elektromotors 1 hervor. Diese Medienleitungen 5 dienen zum Beispiel zum Leiten von Gasen, Luft, Wasser, Flüssigkeiten, Strom, Licht und so weiter.

Erfindungsgemäß wird vorgeschlagen, dass der Rückschlusskörper 3 die Medienleitungen 5 aufnimmt. In dem in Fig. 1 gezeigten Ausführungsbeispiel ist eine zur (nicht gezeigten) Drehachse der Rotorwelle verlaufende Bohrung oder als Tunnel ausgebildete Durchführung 30 vorgesehen, in welcher/m die Medienleitung 5 verläuft.

Der Begriff "Medienleitung" ist dabei sehr umfassend zu verstehen. Als Medienleitung wird dabei ein eigenes, abgeschlossenes System zum Leiten des Mediums verstanden, wie es zum Beispiel bei einem elektrischen Kabel vorgesehen ist, welches eine entsprechend isolierende Ummantelung aufweist. Der Begriff "Medienleitung" 5 kann aber auch so ausgelegt sein, dass die als Tunnel ausgebildete Durchführung 30 beziehungsweise die Bohrung oder der Kanal oder auch die Nuten 31, 32 selber Teil der Medienleitung 5 sind, insbesondere dann, wenn diese Teil eines Leitungssystemes für Wasser, Flüssigkeiten, Gas und so weiter ist.

Gerade in Fig. 1 wird der erfindungsgemäße Vorteil deutlich, nachdem die sowieso vorhandene Breite des Rückschlusskörpers 3 zusätzlich benützt wird, um in diesem Rückschlusskörper die Medienleitung 5 aufzunehmen. Die Anordnung der Medienleitung 5 benötigt daher keinen zusätzlichen Bauraum und verbreitert den Elektromotor 1 nicht.

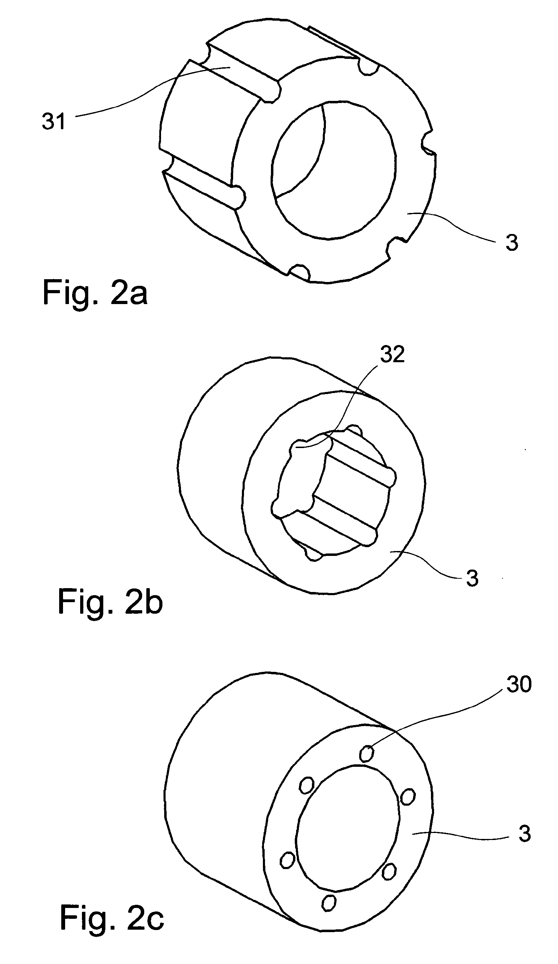

In Fig. 2a ist eine alternative Ausgestaltung des Rückschlusskörpers 3 gezeigt. Er besteht hier aus auf der Außenseite des hülsenartigen Rückschlusskörpers 3 vorgesehene Nuten 31.

In Fig. 2b ist die Medienleitung 5 in auf der Innenseite vorgesehenen Nuten 32 vorgesehen. Es ist klar, dass hier eine Vielzahl von Medienleitungen verlegbar sind, da auch eine Vielzahl von Nuten angeordnet sind.

Die in Fig. 2c gezeigte Ausgestaltung des Rückschlusskörpers 3 entspricht dem in Fig. 1 eingebauten Rückschlusskörper 3.

Die in den Ausführungsbeispielen gezeigten Rückschlusskörper 3 sind hülsenartig oder zylinderartig aufgebaut, ohne hierauf die Erfindung in irgendeiner Weise beschränken zu wollen. Sie können einstückig gefertigt sein oder aus verschiedenen Hülsensegmenten bestehen oder aber aus einer Vielzahl zu einem Paket zusammengestellter Rückschlussscheiben bestehen, die unter sich gleichartig beziehungsweise identisch sind.

Die Ausgestaltung des Rückschlusskörpers 3 ist dabei an eine zylinderförmige Ausgestaltung nicht gebunden, insbesondere die Außenkontur des Rückschlusskörpers kann oval oder auch rechteckig gebildet sein.

Auf der Außenseite des Elektromotors 1 ist eine hülsenartige Ummantelung 10 vorgesehen, die entweder eine Schutzfunktion für den Elektromotor hat oder auch Teil des Motorgehäuses sein kann.

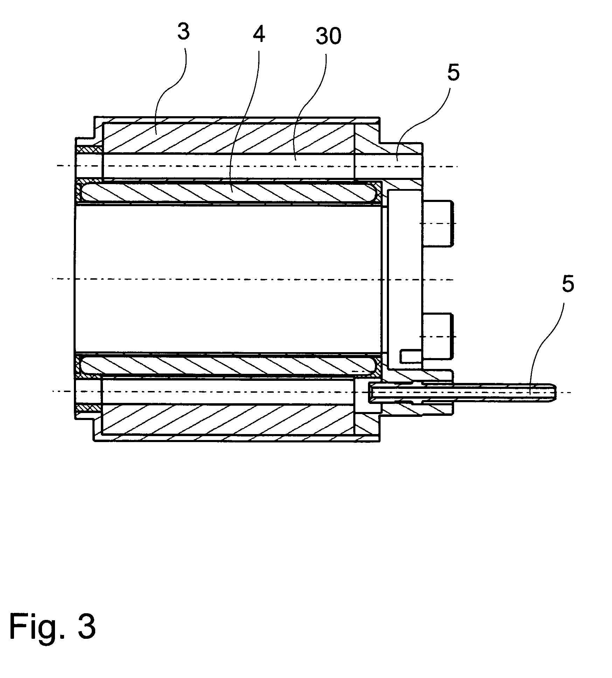

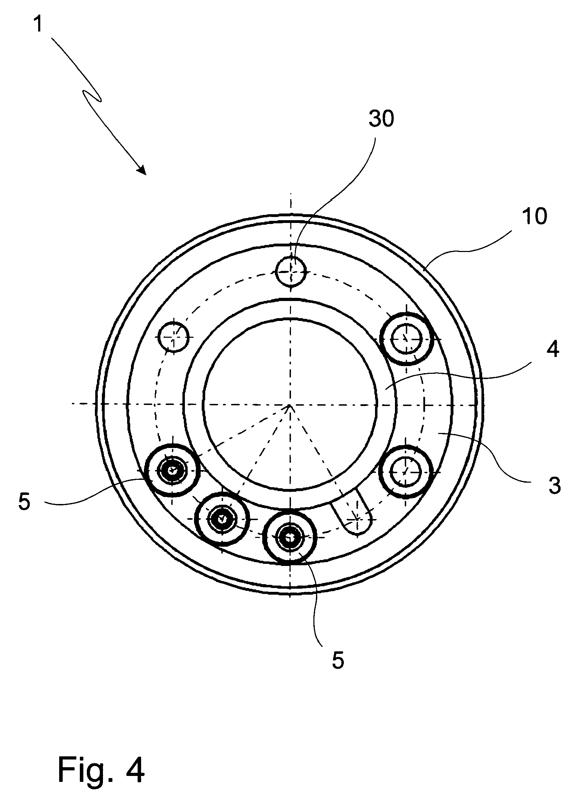

In Fig. 3 und Fig. 4 ist der erfindungsgemäße Elektromotor nochmals in zwei verschiedenen Ansichten gezeigt. Die hier verwendeten Bezugsziffern ergeben sich in analoger Weise aus Fig. 1.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Elektromotor, bestehend aus einem auf einer Rotorwelle drehbar gelagerten Rotor und einem den Rotor umgebenden Stator, wobei der Stator einen Rückschlusskörper und eine mit Strom beaufschlagbare Wicklung aufweist und der Elektromotor mindestens eine Medienleitung besitzt, **dadurch gekennzeichnet, dass** der Rückschlusskörper (3) zumindest eine Durchführung (30) für die wenigstens teilweise Aufnahme oder Bildung der Medienleitung/en (5) aufweist.

2. Elektromotor nach Anspruch 1, **dadurch gekennzeichnet, dass** die Durchführung (30) im Rückschlusskörper (3) als schlauchartiger Kanal, Tunnel oder Bohrung zur Bildung oder Aufnahme der Medienleitung/en (5) vorgesehen ist.

3. Elektromotor nach einem oder beiden der vorhergehenden Ansprüche, **dadurch gekennzeichnet, dass** die Medienleitungen (5) zur Unterstützung und/oder zum Betreiben der von dem Elektromotor angetriebenen Elemente, wie zum Beispiel von Werkzeugen dient.

4. Elektromotor nach einem oder mehreren der vorhergehenden Ansprüche, **dadurch gekennzeichnet, dass** die Medienleitungen (5) von der der Antriebsseite abgewandten Seite des Elektromotors zu der dem Antrieb zugewandten Seite durch den Elektromotor geführt werden.

5. Elektromotor nach einem oder mehreren der vorhergehenden Ansprüche, **dadurch gekennzeichnet, dass** die Medienleitungen (5) als vom Motor räumlich getrennte Einheiten vorgesehen sind und/oder die Durchführung (30) im Rückschlusskörper (3) als eine Nut (31, 32) oder Kehle zur Bildung oder Aufnahme der Medienleitung/en (5) vorgesehen ist.

6. Elektromotor nach einem oder mehreren der vorhergehenden Ansprüche, **dadurch gekennzeichnet, dass** die Durchführung (30) beziehungsweise die Medienleitung (5) im Rückschlusskörper (3) bezogen zur Rotationsachse der Rotationswelle schräg verlaufend angeordnet ist und/oder die Durchführung (30) beziehungsweise die Medienleitung (5) im Rückschlusskörper (3) parallel zur Rotationsachse der Rotorwelle angeordnet ist.

7. Elektromotor nach einem oder mehreren der vorhergehenden Ansprüche, **dadurch gekennzeichnet, dass** die Durchführung (30) beziehungsweise die Medienleitung (5) im Rückschlusskörper (3) auf einer spiralförmigen oder schraubenförmigen Bahn angeordnet ist und/oder die Durchführung (30) beziehungsweise die Medienleitung (5) im Rückschlusskörper (3) mittig angeordnet ist.

8. Elektromotor nach einem oder mehreren der vorhergehenden Ansprüche, **dadurch gekennzeichnet, dass** die Durchführung (30) beziehungsweise die Medienleitung (5) im Randbereich des Rückschlusskörpers (3), auf dessen Innen- oder Außenseite angeordnet ist und/oder der Rückschlusskörper (3) als Hülse ausgebildet ist.

9. Elektromotor nach einem oder mehreren der vorhergehenden Ansprüche, **dadurch gekennzeichnet, dass** der Rückschlusskörper (3) aus mehreren zusammengefassten Hülsensegmenten besteht und/oder der Rückschlusskörper (3) aus einer Vielzahl in axialer Richtung nebeneinander angeordneten Rückschlussscheiben besteht.

10. Elektromotor nach einem oder mehreren der vorhergehenden Ansprüche, **dadurch gekennzeichnet, dass** die Rückschlussscheiben als Stanzteile ausgebildet sind, insbesondere mit den die Durchführung (30) beziehungsweise den Kanal oder Tunnel bildenden Öffnungen beziehungsweise die Nut (31, 32) bildenden Ausnehmungen.

11. Elektromotor nach einem oder mehreren der vorhergehenden Ansprüche, **dadurch gekennzeichnet, dass** der Elektromotor (1) als Gleichstrommotor, insbesondere als kollektorloser Gleichstrommotor ausgebildet ist und/oder der Elektromotor (1) zum Antrieb eines, insbesondere ankoppelbaren, medizinischen oder dentalen Instrumentes oder Gerätes dient.

12. Elektromotor nach einem oder mehreren der vorhergehenden Ansprüche, **dadurch gekennzeichnet, dass** die Medienleitung (5) für den Transport von Gas, Flüssigkeit, Strom, Daten oder Licht dient.

13. Elektromotor nach einem oder mehreren der vorhergehenden Ansprüche, **dadurch gekennzeichnet, dass** die Wicklung (4) auf der dem Rotor zugewandten Innenseite des Rückschlusskörpers (3) angeordnet ist und/oder die Wicklung (4) eine Schutzummantelung (40) oder Schutzschicht aufweist.

14. Medizinisches oder dentales, durch einen Elektromotor nach einem oder mehreren der vorhergehenden Ansprüche antreibbares Werkzeug.

15. Werkzeugmotorspindel mit einem Elektromotor nach einem oder mehreren der vorhergehenden Ansprüche 1 bis 13 als Antrieb des Werkzeuges.
